# EUROPÄISCHE PATENTSCHRIFT

(11) **EP 3 249 348 B1**
(45) Veröffentlichungstag und Bekanntmachung des Hinweises auf die Patenterteilung: **03.07.2019**
(21) Anmeldenummer: 16171490.2
(22) Anmeldetag: 26.05.2016
(51) Int. Cl.: G01B 11/06, G01B 11/22

(54) **SENSORVORRICHTUNG ZUR VERMESSUNG EINER OBERFLÄCHE**
SENSOR DEVICE FOR MEASUREMENT OF A SURFACE
DISPOSITIF DE CAPTEUR DESTINE A MESURER UNE SURFACE

(43) Veröffentlichungstag der Anmeldung: 29.11.2017
(73) Patentinhaber: Baumer Electric AG, 8501 Frauenfeld (CH)
(72) Erfinder: Müller, Klaus Friedrich, 69120 Heidelberg (DE); Bauer, Sven, 8280 Kreuzlingen (CH)
(74) Vertreter: Strauss, Steffen

(56) Entgegenhaltungen:
- EP-A1- 0 540 343
- DE-A1- 4 445 552
- US-A1- 2007 210 240
- US-A1- 2015 276 388
- US-A1- 2016 084 641

## Beschreibung

Die vorliegende Erfindung betrifft eine Sensorvorrichtung zur Vermessung einer Oberfläche.

Triangulationssensoren, insbesondere Lasertriangulationssensoren, können zum kontaktlosen Messen von Abständen eingesetzt werden. Dabei kann jedoch meist nur der Abstand eines Oberflächenbereichs, auf welchen ein Lichtstrahl des Triangulationssensors gerade ausgerichtet ist, erfasst werden. Höhenunterschiede zwischen Oberflächenbereichen, beispielsweise eine Profiltiefe eines Reifenprofils, oder Übergänge wie Kanten und Rillen, können somit nicht direkt mit einem Triangulationssensor, insbesondere einem Triangulationssensor mit einer einzigen Lichtquelle, erfasst werden. Die Druckschrift DE 102 12 382 B4 beschreibt ein Sensorsystem, bei welchem zwei separate Versetzungssensoren eingesetzt werden, um eine Stufenhöhe oder eine Dicke eines Objekts zu erfassen.

Die Druckschrift EP 2348331 A1 beschreibt einen optoelektronischen Sensor zur Detektion von Objektkanten, mit mindestens zwei Lichtsendern, die jeweils eine Lichtquelle und eine Sendeoptik zur Erzeugung kollimierter Sendelichtstrahlen aufweisen.

Aus den Druckschriften US 2007/210240 A1, US 2015/276388 A1, US 2016/084641 A1 und DE 44 45 522 A1 sind weitere Messvorrichtungen bekannt, die über eine Detektion des von einer zu untersuchenden Probe reflektierten Lichts eine Bestimmung von Eigenschaften der Probe ermöglichen.

Es ist die der Erfindung zugrundeliegende Aufgabe ein effizientes Konzept zum Vermessen einer Oberfläche, insbesondere zum Erfassen eines Oberflächenprofils einer Oberfläche, zu schaffen.

Diese Aufgabe wird durch die Merkmale des unabhängigen Anspruchs gelöst. Vorteilhafte Weiterbildungsformen sind Gegenstand der abhängigen Patentansprüche, der Beschreibung sowie der Zeichnungen.

Gemäß einem ersten Aspekt betrifft die Erfindung eine Sensorvorrichtung zur Vermessung einer Oberfläche, mit einer Beleuchtungseinrichtung zum Aussenden eines Lichtstrahls, einer Optikeinrichtung, welche ausgebildet ist, den Lichtstrahl in einen ersten Teillichtstrahl und einen zweiten Teillichtstrahl aufzuteilen, wobei die Optikeinrichtung ausgebildet ist, den ersten Teillichtstrahl in Richtung eines ersten Oberflächenbereichs der Oberfläche auszusenden und den zweiten Teillichtstrahl in Richtung eines zweiten Oberflächenbereichs der Oberfläche auszusenden, einem Lichtsensor, welcher ausgebildet ist, eine Reflexion des ersten Teillichtstrahls an dem ersten Oberflächenbereich und eine Reflexion des zweiten Teillichtstrahls an dem zweiten Oberflächenbereich zu empfangen, und einem Prozessor, welcher ausgebildet ist, auf der Basis der jeweiligen Position der Reflexion des ersten Teillichtstrahls und der Reflexion des zweiten Teillichtstrahls auf dem Lichtsensor, einen Abstand des ersten Oberflächenbereichs und des zweiten Oberflächenbereichs zu der Sensorvorrichtung zu erfassen. Dadurch wird der Vorteil erreicht, dass eine Sensorvorrichtung geschaffen werden kann, welche gleichzeitige Abstandsmessungen an zwei unterschiedlichen Oberflächenbereichen einer Oberfläche ermöglicht und dabei nur eine Beleuchtungseinrichtung und einen Lichtsensor aufweist. Eine solche Sensorvorrichtung kann besonders kostengünstig in der Herstellung sein und kann kompakte Ausmaße aufweisen, insbesondere im Vergleich zu einer Sensorvorrichtung mit jeweils zwei separaten Lichtquellen und Lichtsensoren für die beiden Abstandsmessungen.

Die Oberflächenbereiche können Bereiche auf einer Oberfläche oder einer Seitenfläche eines Objekts, beispielsweise eines Reifens, sein. Die Oberfläche kann eine gleichmäßige oder eine ungleichmäßiges Struktur, insbesondere ein Profil, aufweisen. Die Oberfläche ist beispielsweise eine Lauffläche eines Reifens. Die Größe der jeweiligen Oberflächenbereiche kann durch einen Querschnitt des von der Beleuchtungseinrichtung ausgestrahlten Lichtstrahls, bzw. einem Querschnitt des jeweiligen festgelegt sein.

Die Sensorvorrichtung kann ein Handgerät zur Vermessung der Oberfläche sein und für eine Messung von einem Benutzer über die Oberfläche gehalten oder über die Oberfläche bewegt werden.

Die Sensorvorrichtung kann als Triangulationssensor, insbesondere Lasertriangulationssensor, ausgebildet sein oder einen Triangulationssensor umfassen. Der erste Teillichtstrahl und der zweite Teillichtstrahl können dabei jeweils zur Abstandsmessung, insbesondere zur gleichzeitigen Abstandsmessung, zweier unterschiedlicher Oberflächenbereiche zu der Sensorvorrichtung verwendet werden.

Der Prozessor kann als Mikroprozessor ausgebildet sein. Der Prozessor kann einen integrierten Schaltkreis umfassen oder als integrierter Schaltkreis ausgebildet sein. Ferner kann der Prozessor in ein an die Sensorvorrichtung angeschlossenes Datenverarbeitungsgerät, beispielsweise einen Desktop-Computer oder einen Laptop, integriert sein.

Gemäß einer Ausführungsform ist die Optikeinrichtung ausgebildet, die Reflexion des ersten Teillichtstrahls an dem ersten Oberflächenbereich und die Reflexion des zweiten Teillichtstrahls an dem zweiten Oberflächenbereich zu empfangen und in Richtung des Lichtsensors zu leiten. Dadurch wird der Vorteil erreicht, dass die Reflexionen der jeweiligen Teillichtstrahlen an den Oberflächenbereichen effizient von dem Lichtsensor erfasst werden können. Der Lichtsensor muss hierfür nicht direkt auf die Oberfläche ausgerichtet sein.

Gemäß einer Ausführungsform ist die Sensorvorrichtung über die Oberfläche bewegbar, wobei der Prozessor ausgebildet ist, eine zeitliche Änderung des Abstands des ersten Oberflächenbereichs zu der Sensorvorrichtung und eine zeitliche Änderung des Abstands des zweiten Oberflächenbereichs zu der Sensorvorrichtung zu erfassen, wobei der Prozessor ferner ausgebildet ist, auf der Basis der Abstandsänderungen des ersten und des zweiten Oberflächenbereichs zu der Sensorvorrichtung eine Bewegungsgeschwindigkeit der Sensorvorrichtung über die Oberfläche zu ermitteln. Dadurch wird der Vorteil erreicht, dass eine Bewegung der Sensorvorrichtung über die Oberfläche effizient erfasst werden kann.

Die Bewegung kann dabei derart erfolgen, dass die Teillichtstrahlen nacheinander über die gleichen oder annähernd gleichen Oberflächenbereiche, beispielsweise gleiche Strukturen eines Oberflächenprofils, geführt werden. Aus dem zeitlichen Abstand der Erfassung der gleichen Oberflächenstruktur mit dem ersten Teillichtstrahl und dem zweiten Teillichtstrahl kann die Bewegungsgeschwindigkeit ermittelt werden. Dabei kann auch der Abstand des ersten Teillichtstrahls und des zweiten Teillichtstrahls, bzw. des mit dem ersten Teillichtstrahl beleuchteten ersten Oberflächenbereichs und des mit dem zweiten Teillichtstrahl beleuchteten zweiten Oberflächenbereichs, berücksichtigt werden. Gemäß einer Ausführungsform ist der Prozessor ausgebildet, auf der Basis der Abstandsänderung des ersten Oberflächenbereichs und/oder des zweiten Oberflächenbereichs zu der Sensorvorrichtung, und der ermittelten Bewegungsgeschwindigkeit der Sensorvorrichtung ein Oberflächenprofil der Oberfläche zu ermitteln. Dadurch wird der Vorteil erreicht, dass ein Profil einer Oberfläche mit einer Sensorvorrichtung von geringer Größe und mit einem einfachen Aufbau aufgenommen werden kann. Die Oberfläche ist beispielsweise eine Lauffläche eines Reifens, wobei die Sensorvorrichtung quer zu der Rollrichtung oder längs der Rollrichtung des Reifens über die Lauffläche bewegt werden kann, um ein Profil der Lauffläche entlang der Bewegungsrichtung zu erfassen.

Erfindungsgemäß umfasst die Optikeinrichtung eine erste teiltransparente Spiegeleinrichtung, wobei die erste teiltransparente Spiegeleinrichtung ausgebildet ist, den Lichtstrahl in den ersten Teillichtstrahl und den zweiten Teillichtstrahl aufzuteilen, wobei die erste teiltransparente Spiegeleinrichtung ferner ausgebildet ist, den ersten Teillichtstrahl in Richtung des ersten Oberflächenbereichs zu reflektieren, und die Reflexion des ersten Teillichtstrahls an dem ersten Oberflächenbereich in Richtung des Lichtsensors zu reflektieren. Dadurch wird der Vorteil erreicht, dass der Lichtstrahl effizient in den ersten Teillichtstrahl und den zweiten Teillichtstrahl aufgeteilt werden kann. Ferner kann der erste Teillichtstrahl mittels Reflexionen effizient in Richtung des Oberflächenbereichs geleitet werden, und kann der an dem Oberflächenbereich reflektierte erste Teillichtstrahl effizient auf den Lichtsensor geleitet werden. Der Lichtsensor kann dabei seitlich der Optikeinrichtung angeordnet sein, wodurch die Sensorvorrichtung kompaktere Ausmaße aufweisen kann.

Erfindungsgemäß umfasst die erste teiltransparente Spiegeleinrichtung einen teiltransparenten Spiegel, wobei der teiltransparente Spiegel mit dem zweiten Teillichtstrahl durchleuchtbar ist. Dadurch wird der Vorteil erreicht, dass eine effiziente Aufteilung des Lichtstrahls in den ersten Teillichtstrahl und den zweiten Teillichtstrahl erfolgen kann.

Gemäß einer Ausführungsform umfasst die Optikeinrichtung eine zweite Spiegeleinrichtung, welche hinter der ersten Spiegeleinrichtung angeordnet ist, wobei die zweite Spiegeleinrichtung ausgebildet ist, den zweiten Teillichtstrahl nach Durchleuchten der ersten Spiegeleinrichtung in Richtung des zweiten Oberflächenbereichs zu reflektieren und die Reflexion des zweiten Teillichtstrahls an dem zweiten Oberflächenbereich in Richtung des Lichtsensors zu reflektieren. Dadurch wird der Vorteil erreicht, dass der zweite Teillichtstrahl mittels Reflexionen effizient in Richtung des Oberflächenbereichs geleitet werden kann und der an dem Oberflächenbereich reflektierte erste Teillichtstrahl effizient auf den Lichtsensor geleitet werden kann. Der Lichtsensor kann dabei seitlich der Optikeinrichtung angeordnet sein, wodurch die Sensorvorrichtung kompaktere Ausmaße aufweisen kann.

Die erste teiltransparente Spiegeleinrichtung und die zweite Spiegeleinrichtung können jeweils in einem Abstand zueinander angeordnet sein, wobei der Abstand der Spiegeleinrichtungen eine Unterscheidbarkeit der reflektierten Teillichtstrahlen auf dem Lichtsensor beeinflusst. So kann der Abstand der Positionen der reflektierten Teillichtstrahlen auf dem Lichtsensor durch einen größeren Abstand der Spiegeleinrichtungen erhöht und somit eine Unterscheidbarkeit der beiden Teillichtstrahlen vereinfacht werden.

Der Abstand der ersten teiltransparenten Spiegeleinrichtung und der zweiten Spiegeleinrichtung kann einstellbar sein. Der Prozessor kann den Abstand der Spiegeleinrichtungen ferner bei der Ermittlung der Bewegungsgeschwindigkeit der Sensorvorrichtung berücksichtigen.

Gemäß einer Ausführungsform sind die erste teiltransparente Spiegeleinrichtung und die zweite Spiegeleinrichtung ausgebildet, den ersten Teillichtstrahl und den zweiten Teillichtstrahl parallel oder annähernd parallel zueinander in Richtung des ersten bzw. zweiten Oberflächenbereichs zu reflektieren. Dadurch wird der Vorteil erreicht, dass beide Teillichtstrahlen senkrecht auf die Oberfläche gerichtet und Abschattungen des ersten und/oder zweiten Teillichtstrahls durch Oberflächenstrukturen verhindert werden können.

Gemäß einer Ausführungsform umfasst die zweite Spiegeleinrichtung einen Spiegel oder ein Reflexionsprisma. Dadurch wird der Vorteil erreicht, dass der zweite Teillichtstrahl effizient in Richtung der Oberfläche und, nach Reflexion an der Oberfläche, in Richtung des Lichtsensors reflektiert werden kann. Ein Reflexionsprisma bietet zudem den Vorteil, dass eine Wegstrecke, welche von dem zweiten Teillichtstrahl zurückgelegt wird, durch vielfache Reflexionen des zweiten Teillichtstrahls in dem Reflexionsprisma erhöht werden kann. Durch die erhöhte Wegstrecke des zweiten Teillichtstrahls kann ein Abstand der jeweiligen Auftreffpunkte des ersten Teillichtstrahls und des zweiten Teillichtstrahls auf den Lichtsensor erhöht werden.

Gemäß einer Ausführungsform umfasst der Lichtsensor ein Sensorarray, insbesondere ein Dioden-Array. Dadurch wird der Vorteil erreicht, dass die Positionen der reflektierten Teillichtstrahlen auf dem Sensorarray effizient erfasst werden können.

Gemäß einer Ausführungsform ist der Prozessor ausgebildet, die Reflexion des ersten Teillichtstrahls und die Reflexion des zweiten Teillichtstrahls auf der Basis der Positionen der Reflexionen auf dem Lichtsensor und/oder auf der Basis einer mit dem Lichtsensor erfassten Intensität der Reflexionen zu unterscheiden. Dadurch wird der Vorteil erreicht, dass die jeweiligen Teillichtstrahlen effizient unterschieden werden können.

Gemäß einer Ausführungsform umfasst der Lichtsensor eine Linseneinrichtung, welche ausgebildet ist, eine fokussierte Abbildung des reflektierten ersten Teillichtstrahls und des reflektierten zweiten Teillichtstrahls auf dem Lichtsensor, insbesondere auf dem Sensorarray, zu erzeugen. Dadurch wird der Vorteil erreicht, dass die jeweiligen Reflexionen des ersten und des zweiten Teillichtstrahls effizient von dem Lichtsensor erfasst werden können. Die Fokussierung durch die Linseneinrichtung reduziert dabei beispielsweise einen Durchmesser der reflektierten Teillichtstrahlen und vereinfacht somit die Erfassung und Unterscheidung der jeweiligen Teillichtstrahlen.

Die Linseneinrichtung kann eine Sammellinse umfassen, welche in einem festen Abstand zu dem Lichtsensor, insbesondere zu dem Sensorarray des Lichtsensors, angeordnet ist.

Gemäß einer Ausführungsform umfasst die Beleuchtungseinrichtung eine Laserdiode, eine LED oder einen Laser. Dadurch wird der Vorteil erreicht, dass der Lichtstrahl effizient erzeugt werden kann.

Gemäß einer Ausführungsform ist die Beleuchtungseinrichtung ausgebildet, den Lichtstrahl als gebündelten Lichtstrahl, insbesondere mit einem punktförmigen oder einem strichförmigen Querschnitt, auszustrahlen. Ein Lichtstrahl mit einem punktförmigen Querschnitt bietet den Vorteil einer möglichst hohen Energiedichte und einer geringen Verteilung der reflektierten Teillichtstrahlen auf dem Lichtsensor. Ein Lichtstrahl mit einem strichförmigen Querschnitt ist dagegen weniger anfällig gegenüber Unregelmäßigkeiten oder Verschmutzungen auf der Oberfläche.

Gemäß einer Ausführungsform ist die Beleuchtungseinrichtung ausgebildet, den Lichtstrahl in einem Weißlicht-Wellenlängenbereich, einem Infrarot-Wellenlängenbereich oder einem UV-Wellenlängenbereich auszustrahlen. Beispielsweise ist die Beleuchtungseinrichtung ausgebildet, das Beleuchtungslicht mit einer Wellenlänge von 650 nm auszustrahlen. Ein solches sichtbares Beleuchtungslicht bietet den Vorteil, dass ein Benutzer der Sensorvorrichtung die Ausrichtung der Teillichtstrahlen überprüfen kann.

Gemäß einer Ausführungsform umfasst die Sensorvorrichtung ein Gehäuse, wobei die Beleuchtungseinrichtung, die Optikeinrichtung, der Lichtsensor und der Prozessor in das Gehäuse aufgenommen sind.

Gemäß einer Ausführungsform umfasst die Sensorvorrichtung eine Anzeige zum Anzeigen der ermittelten Abstände der Oberflächenbereiche, insbesondere zum Anzeigen eines auf der Basis der Abstände der Oberflächenbereiche ermittelten Oberflächenprofils der Oberfläche. Dadurch wird der Vorteil erreicht, dass einem Benutzer das Messergebnis der Sensorvorrichtung direkt angezeigt werden kann.

Die Sensorvorrichtung kann eine Kommunikationsschnittstelle, beispielsweise eine USB-Schnittstelle, zum Ausgeben der erfassten Abstände und/oder des erfassten Oberflächenprofils umfassen. Die Sensorvorrichtung kann ferner einen Speicher zum Speichern der erfassten Abstände und/oder des erfassten Oberflächenprofils umfassen.

Die Erfindung kann in Hardware und/oder Software realisiert werden.

Ausführungsbeispiele der Erfindung sind in den Zeichnungen dargestellt und werden im Folgenden näher beschrieben.

Es zeigen:
- Fig. 1: eine Seitenansicht und eine Draufsicht einer Sensorvorrichtung zum Vermessen einer Oberfläche; und
- Fig. 2: eine schematische Darstellung einer Sensorvorrichtung mit einem Reflexionsprisma.

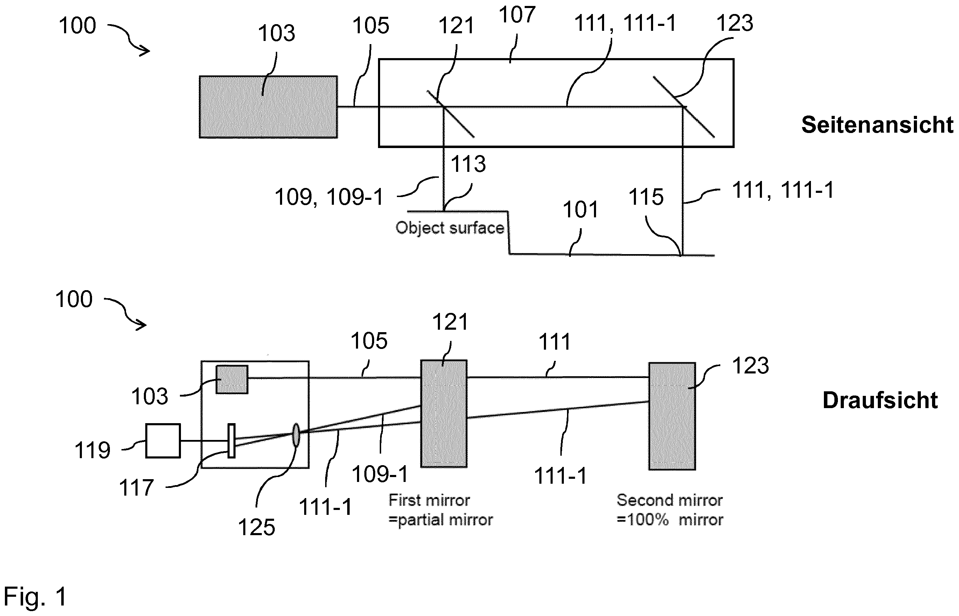

Fig. 1 zeigt eine Seitenansicht und eine Draufsicht einer Sensorvorrichtung 100 zum Vermessen einer Oberfläche 101 gemäß einer Ausführungsform.

Die Sensorvorrichtung 100 umfasst eine Beleuchtungseinrichtung 103 zum Aussenden eines Lichtstrahls 105, eine Optikeinrichtung 107, welche ausgebildet ist, den Lichtstrahl 105 in einen ersten Teillichtstrahl 109 und einen zweiten Teillichtstrahl 111 aufzuteilen, wobei die Optikeinrichtung 107 ausgebildet ist, den ersten Teillichtstrahl 109 in Richtung eines ersten Oberflächenbereichs 113 der Oberfläche 101 auszusenden, und den zweiten Teillichtstrahl 111 in Richtung eines zweiten Oberflächenbereichs 115 der Oberfläche 101 auszusenden, einen Lichtsensor 117, welcher ausgebildet ist, eine Reflexion 109-1 des ersten Teillichtstrahls 109 an dem ersten Oberflächenbereich 113 und eine Reflexion 111-1 des zweiten Teillichtstrahls 111 an dem zweiten Oberflächenbereich 115 zu empfangen, und einen Prozessor 119, welcher ausgebildet ist, auf der Basis der jeweiligen Position der Reflexion 109-1 des ersten Teillichtstrahls 109 und der Reflexion 111-1 des zweiten Teillichtstrahls 111 auf dem Lichtsensor 117 einen Abstand des ersten Oberflächenbereichs 113 und des zweiten Oberflächenbereichs 115 zu der Sensorvorrichtung 100 zu erfassen.

Die Oberflächenbereiche 113, 115 können Bereiche auf einer Oberfläche oder einer Seitenfläche, eines Objekts, beispielsweise eines Reifens, sein. Die Oberfläche 101 kann eine gleichmäßige oder eine ungleichmäßiges Struktur, insbesondere ein Profil, aufweisen. Die Oberfläche 101 ist beispielsweise eine Lauffläche eines Reifens. Die Größe der jeweiligen Oberflächenbereiche 113, 115 kann durch einen Querschnitt des von der Beleuchtungseinrichtung 103 ausgestrahlten Lichtstrahls 105, bzw. einem Querschnitt des jeweiligen Teillichtstrahls 109, 111 festgelegt sein.

Die Sensorvorrichtung 100 kann ein Handgerät zur Vermessung der Oberfläche 101 sein und für eine Messung von einem Benutzer über die Oberfläche 101 gehalten oder über die Oberfläche 101 bewegt werden.

Die Sensorvorrichtung 100 kann als Triangulationssensor, insbesondere Lasertriangulationssensor, ausgebildet sein oder einen Triangulationssensor umfassen. Der erste Teillichtstrahl 109 und der zweite Teillichtstrahl 111 können dabei jeweils zur Abstandsmessung, insbesondere zur gleichzeitigen Abstandsmessung, zweier unterschiedlicher Oberflächenbereiche 113, 115 zu der Sensorvorrichtung 100 verwendet werden.

Der Prozessor 119 kann als Mikroprozessor ausgebildet sein. Der Prozessor 119 kann einen integrierten Schaltkreis umfassen, oder als integrierter Schaltkreis ausgebildet sein. Ferner kann der Prozessor 119 in ein an die Sensorvorrichtung 100 angeschlossenes Datenverarbeitungsgerät, beispielsweise einen Desktop-Computer oder einen Laptop, integriert sein.

Die Beleuchtungseinrichtung 103 kann eine Laserdiode, eine LED oder einen Laser umfassen. Die Beleuchtungseinrichtung 103 kann ausgebildet sein, den Lichtstrahl 105 als gebündelten Lichtstrahl auszustrahlen. Der Lichtstrahl 105 kann dabei einen punktförmigen oder einen strichförmigen Querschnitt aufweisen. Die Beleuchtungsvorrichtung 103 umfasst beispielsweise einen Punktlaserlaser (collimated laser) oder einen Linienlaser.

Die Beleuchtungseinrichtung 103 kann ausgebildet sein, den Lichtstrahl 105 in einem Weißlicht-Wellenlängenbereich, einem Infrarot-Wellenlängenbereich oder einem UV-Wellenlängenbereich auszustrahlen. Beispielsweise ist die Beleuchtungseinrichtung 103 ein Laser mit einer Wellenlänge von 650 nm. Der Lichtsensor 117 kann zur Detektion von Licht in dem entsprechenden Wellenlängenbereich ausgebildet sein.

Die erste teiltransparente Spiegeleinrichtung 121 kann nicht erfindungsgemäß als Strahlteiler oder erfindungsgemäß als teiltransparenter Spiegel für den Lichtstrahl 105 ausgebildet sein. Die erste teiltransparente Spiegeleinrichtung 121 ist ausgebildet, den ersten Teillichtstrahl 109 in Richtung des ersten Oberflächenbereichs 113 zu reflektieren. Dabei ist die erste teiltransparente Spiegeleinrichtung 121 mit dem zweiten Teillichtstrahl 111 durchleuchtbar.

Die erste teiltransparente Spiegeleinrichtung 121 kann dabei derart angeordnet sein, dass sie eine Reflexion 109-1 des ersten Teillichtstrahls 109 an der Oberfläche 101 wieder aufnimmt und in Richtung des Lichtsensors 117 reflektiert. Die Position, an welcher dieser zurückreflektierte erste Teillichtstrahl 109 auf den Lichtsensor 117 trifft, hängt dabei vor allem von dem Abstand des beleuchteten ersten Oberflächenbereichs 113 zu der ersten teiltransparente Spiegeleinrichtung 121 und von dem Abstand der ersten teiltransparenten Spiegeleinrichtung 121 zu dem Lichtsensor 117 ab. Bei einer Änderung des Abstandes des beleuchteten ersten Oberflächenbereichs 113 zu der ersten teiltransparenten Spiegeleinrichtung 121 ändert sich beispielsweise ein Winkel, unter welchem die teiltransparente Spiegeleinrichtung 121 den reflektieren ersten Teillichtstrahl 109 auf den Lichtsensor 117 reflektiert.

Der Prozessor 119 kann ausgebildet sein, den Abstand des ersten Oberflächenbereichs 113 zu der ersten teiltransparenten Spiegeleinrichtung 121 bzw. zu der Optikeinrichtung 107 auf der Basis der Position des reflektierten ersten Teillichtstrahls 109 auf dem Lichtsensor 117 zu erfassen.

Die zweite Spiegeleinrichtung 123 der Optikeinrichtung 107 kann hinter der ersten Spiegeleinrichtung 121 angeordnet und ausgebildet sein, den zweiten Teillichtstrahl 111 nach Durchleuchten der ersten Spiegeleinrichtung 121 in Richtung des zweiten Oberflächenbereichs 115 zu reflektieren. Die zweite Spiegeleinrichtung 123 kann dabei derart angeordnet sein, dass sie eine Reflexion 111-1 des zweiten Teillichtstrahls 111 an dem zweiten Oberflächenbereich 115 wieder aufnimmt und in Richtung des Lichtsensors 117 reflektiert. Der zweite Teillichtstrahl 111 kann dabei erneut die erste teiltransparente Spiegeleinrichtung 121 durchstrahlen.

Die Position, an welcher der zurückreflektierte zweite Teillichtstrahls 111 auf den Lichtsensor 117 trifft, hängt dabei vor allem von dem Abstand des beleuchteten zweiten Oberflächenbereichs 115 zu der zweiten Spiegeleinrichtung 123 und von dem Abstand der zweiten Spiegeleinrichtung 123 zu dem Lichtsensor 117 ab. Insbesondere hängt die Position von der Länge des Strahlenganges des zweiten Teillichtstrahls 111 nach Reflexion an dem zweiten Oberflächenbereich 115 ab. Bei einer Änderung des Abstandes des beleuchteten zweiten Oberflächenbereichs 115 zu der zweiten Spiegeleinrichtung 123 ändert sich beispielsweise ein Winkel, unter welchem die zweite Spiegeleinrichtung 123 den reflektieren zweiten Teillichtstrahl 111 auf den Lichtsensor 117 reflektiert.

Der Prozessor 119 kann ausgebildet sein, analog zu dem ersten Teillichtstrahl 109 den Abstand des zweiten Oberflächenbereichs 113 zu der zweiten Spiegeleinrichtung 123 bzw. zu der Optikeinrichtung 107 auf der Basis der Position des reflektierten zweiten Teillichtstrahls 109 auf dem Lichtsensor 117 zu erfassen. Dabei kann der Prozessor 119 ausgebildet sein, die jeweiligen Positionen des reflektierten ersten Teillichtstrahls 109 und des reflektierten zweiten Teillichtstrahls 111 auf dem Lichtsensor gleichzeitig, oder annähernd gleichzeitig, zu erfassen.

Die erste teiltransparente Spiegeleinrichtung 121 und die zweite Spiegeleinrichtung 123 können jeweils in einem Abstand zueinander angeordnet sein, wobei der Abstand der Spiegeleinrichtungen 121, 123 eine Unterscheidbarkeit der reflektierten Teillichtstrahlen 109, 111 auf dem Lichtsensor 117 beeinflusst. So kann der Abstand der Positionen der reflektierten Teillichtstrahlen 109, 111 auf dem Lichtsensor 117 durch einen größeren Abstand der Spiegeleinrichtungen 121, 123 erhöht und eine Unterscheidung der beiden Teillichtstrahlen 109, 111 vereinfacht werden.

Bei einer größeren Weglänge des Strahlengangs des reflektierten zweiten Teillichtstrahls 111, welche beispielsweise aufgrund eines größeren Abstandes zwischen den Spiegeleinrichtungen 121, 123 entsteht, können bereits geringe Unterschiede zwischen den Oberflächenbereichen 113, 115, insbesondere zwischen einer jeweiligen Höhe bzw. einem Abstand der Oberflächenbereiche 113, 115 zu der Optikeinrichtung 107, einen größeren Positionsunterschied der reflektierten Teillichtstrahlen 109, 111 auf dem Lichtsensor 117 verursachen.

Der Lichtsensor 117 kann ein Sensorarray, insbesondere ein Dioden-Array, umfassen. Das Sensorarray kann als 2D Sensorarray ausgebildet sein, welches ausgebildet ist, die Positionen der jeweiligen reflektierten Teillichtstrahlen 109, 111 zu detektieren, insbesondere gleichzeitig zu detektieren.

Der Lichtsensor 117 kann ausgebildet sein, eine Intensität und/oder eine Intensitätsverteilung des reflektierten ersten Teillichtstrahls 109 und des reflektierten zweiten Teillichtstrahls 111 zu erfassen. Der Prozessor 119 kann ausgebildet sein, die Reflexion 109-1 des ersten Teillichtstrahls 109 und die Reflexion 111-1 des zweiten Teillichtstrahls 111 auf der Basis der Positionen der Reflexionen 109-1, 111-1 auf dem Lichtsensor 117 und/oder auf der Basis der erfassten Intensität der Reflexionen 109-1, 111-1 zu unterscheiden. Beispielsweise ist ein erster Bereich auf dem Sensorarray des Lichtsensors 117 dem reflektierten ersten Teillichtstrahl 109 und ein zweiter Bereich auf dem Sensorarray dem reflektierten zweiten Teillichtstrahl 111 zugeordnet.

Der Lichtsensor 117 in Fig. 1 umfasst ferner eine Linseneinrichtung 125. Die Linseneinrichtung 125 kann ausgebildet sein, den reflektierten ersten Teillichtstrahl 109 und den reflektierten zweiten Teillichtstrahl 111 auf den Lichtsensor 117 zu fokussieren bzw. abzubilden. Die Fokussierung durch die Linseneinrichtung 125 reduziert dabei beispielsweise einen Durchmesser der reflektierten Teillichtstrahlen 109, 111 und vereinfacht somit die Erfassung und Unterscheidung der jeweiligen Teillichtstrahlen 109, 111.

Die Linseneinrichtung 125 kann eine Sammellinse umfassen, welche in einem festen Abstand zu dem Lichtsensor 117, insbesondere zu einem Sensorarray des Lichtsensors 117, angeordnet ist.

Gemäß einer Ausführungsform wird die Sensorvorrichtung 100 bei einer Messung über die Oberfläche 101 bewegt. Der Prozessor 119 kann dabei ausgebildet sein, eine zeitlichen Änderung des erfassten Abstands des ersten Oberflächenbereichs 113 zu der Sensorvorrichtung 100 und eine zeitliche Änderung des Abstands des zweiten Oberflächenbereichs 115 zu der Sensorvorrichtung 100 zu erfassen. Der Prozessor 119 kann ferner ausgebildet sein, auf der Basis der erfassten Abstandsänderungen des ersten und des zweiten Oberflächenbereichs 113, 115 eine Bewegungsgeschwindigkeit der Sensorvorrichtung 100 über die Oberfläche 101 zu ermitteln.

Die Bewegung kann dabei derart erfolgen, dass die Teillichtstrahlen 109, 111 nacheinander über die gleichen Oberflächenbereiche, beispielsweise die gleichen Strukturen eines Oberflächenprofils, geführt werden. Aus dem zeitlichen Abstand der Erfassung der gleichen Oberflächenstruktur mit dem ersten Teillichtstrahl 109 und dem zweiten Teillichtstrahl 111 kann die Bewegungsgeschwindigkeit ermittelt werden. Der Prozessor 119 kann ausgebildet sein, bei der Ermittlung der Bewegungsgeschwindigkeit den Abstand der ersten teiltransparenten Spiegeleinrichtung 121 zu der zweiten teiltransparenten Spiegeleinrichtung 123 und den Abstand beider Spiegeleinrichtungen 121, 123 zu dem Lichtsensor 117 zu berücksichtigen.

Der Prozessor 119 kann ferner ausgebildet sein, auf der Basis der erfassten Abstände bzw. der erfassten Abstandsänderung des ersten Oberflächenbereichs 113 und/oder des zweiten Oberflächenbereichs 115 zu der Sensorvorrichtung 100, und auf der Basis der ermittelten Bewegungsgeschwindigkeit der Sensorvorrichtung 100 ein Oberflächenprofil der Oberfläche 101 zu ermitteln.

Die Oberfläche 101 ist beispielsweise eine Lauffläche eines Reifens, wobei die Sensorvorrichtung 100 quer zu der Rollrichtung oder längs der Rollrichtung des Reifens über die Lauffläche bewegt werden kann, um ein Profil der Lauffläche entlang der Bewegungsrichtung zu erfassen.

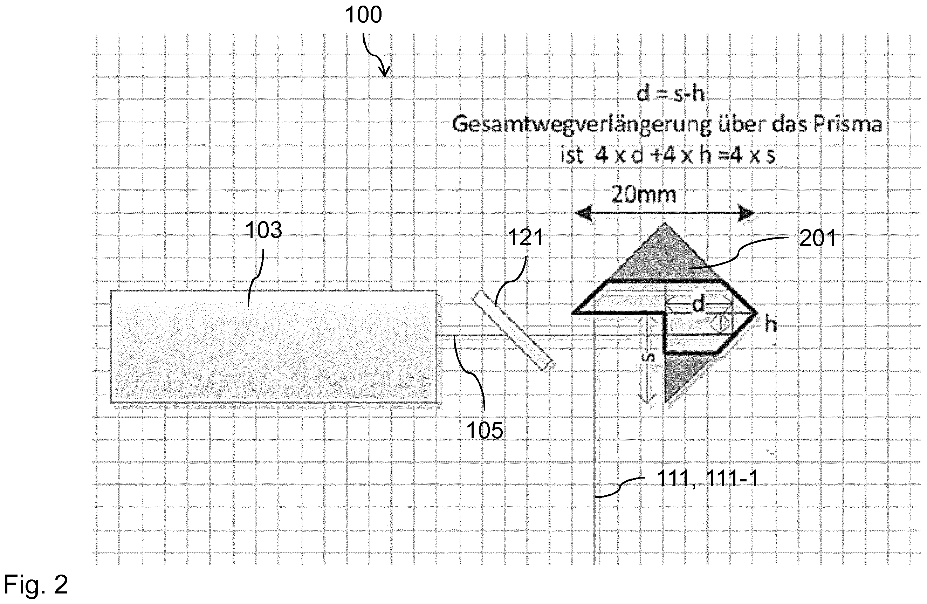

Fig. 2 zeigt eine schematische Darstellung einer Sensorvorrichtung 100 mit einem Reflexionsprisma 201 gemäß einer Ausführungsform.

Die zweite Spiegeleinrichtung 123 ist in Fig. 2 als Reflexionsprisma 201 ausgebildet.

Das Reflexionsprisma 201 ist ausgebildet, den zweiten Teillichtstrahl 111 in Richtung des zweiten Oberflächenbereichs 115 zu reflektieren und die Reflexion des zweiten Teillichtstrahls 111 an der Oberfläche 101 in Richtung des Lichtsensors 117 zu reflektieren.

Dabei kann die Wegstrecke des zweiten Teillichtstrahls 111 durch vielfache Reflexionen in dem Reflexionsprisma 201 erhöht werden. Durch die erhöhte Wegstrecke kann ein Abstand der jeweiligen Auftreffpunkte des ersten Teillichtstrahls 109 und des zweiten Teillichtstrahls 111 auf den Lichtsensor 117 vergrößert werden, ohne dass hierfür der Abstand der zweiten Spiegeleinrichtung 123 zur ersten Spiegeleinrichtung 121 vergrößert werden muss.

Das Reflexionsprisma 201 in Fig. 2 verlängert die Wegstrecke des zweiten Teillichtstrahls 111 um: 4*d + 4*h = 4*s, wobei d, s und h jeweils Wegstrecken sind, welche der zweite Teillichtstrahl 111 in dem Reflexionsprisma 201 mehrfach zurücklegt. Die genaue Länge von d, s und h hängt dabei von der Größe und der genauen Anordnung des Reflexionsprismas 201 relativ zu dem zweiten Teillichtstrahl 111 ab.

Die erste teiltransparente Spiegeleinrichtung 121 und/oder die zweite Spiegeleinrichtung 123 können jeweils ausgebildet sein, den ersten Teillichtstrahl 109 und den zweiten Teillichtstrahl 111 parallel oder annähernd parallel zueinander in Richtung des ersten bzw. zweiten Oberflächenbereichs 113, 115 zu reflektieren. Bei Vermessung einer Oberfläche 101 mit stark abgesetzten Vertiefungen, beispielsweise einem Reifenprofil, kann durch die parallele Anordnung der Teillichtstrahlen 109, 111 eine Abschattung eines der Teillichtstrahlen 109, 111 bei senkrechter Ausrichtung des jeweils anderen Teillichtstrahls verhindert werden.

## Patentansprüche

1. Sensorvorrichtung (100) zur Vermessung einer Oberfläche (101), mit:
einer Beleuchtungseinrichtung (103) zum Aussenden eines Lichtstrahls (105);
einer Optikeinrichtung (107), welche ausgebildet ist, den Lichtstrahl (105) in einen ersten Teillichtstrahl (109) und einen zweiten Teillichtstrahl (111) aufzuteilen, wobei die Optikeinrichtung (107) ausgebildet ist, den ersten Teillichtstrahl (109) in Richtung eines ersten Oberflächenbereichs (113) der Oberfläche (101) auszusenden, und den zweiten Teillichtstrahl (111) in Richtung eines zweiten Oberflächenbereichs (115) der Oberfläche (101) auszusenden;
einem Lichtsensor (117), welcher ausgebildet ist, eine Reflexion (109-1) des ersten Teillichtstrahls (109) an dem ersten Oberflächenbereich (113) und eine Reflexion (111-1) des zweiten Teillichtstrahls (111) an dem zweiten Oberflächenbereich (115) zu empfangen; und
einem Prozessor (119), welcher ausgebildet ist, auf der Basis der jeweiligen Position der Reflexion (109-1) des ersten Teillichtstrahls (109) und der Reflexion (111-1) des zweiten Teillichtstrahls (111) auf dem Lichtsensor (117) einen Abstand des ersten Oberflächenbereichs (113) und des zweiten Oberflächenbereichs (115) zu der Sensorvorrichtung (100) zu erfassen;
wobei die Optikeinrichtung (107) eine erste teiltransparente Spiegeleinrichtung (121) umfasst, wobei die erste teiltransparente Spiegeleinrichtung (121) ausgebildet ist, den Lichtstrahl (105) in den ersten Teillichtstrahl (109) und den zweiten Teillichtstrahl (111) aufzuteilen, wobei die erste teiltransparente Spiegeleinrichtung (121) ferner ausgebildet ist, den ersten Teillichtstrahl (109) in Richtung des ersten Oberflächenbereichs (113) zu reflektieren, und die Reflexion (109-1) des ersten Teillichtstrahls (109) an dem ersten Oberflächenbereich (113) in Richtung des Lichtsensors (117) zu reflektieren;
wobei die erste teiltransparente Spiegeleinrichtung (121) einen teiltransparenten Spiegel umfasst, und wobei der teiltransparente Spiegel mit dem zweiten Teillichtstrahl (111) durchleuchtbar ist.

2. Sensorvorrichtung (100) nach Anspruch 1, wobei die Optikeinrichtung (107) ausgebildet ist, die Reflexion (109-1) des ersten Teillichtstrahls (109) an dem ersten Oberflächenbereich (113) und die Reflexion (111-1) des zweiten Teillichtstrahls (111) an dem zweiten Oberflächenbereich (115) zu empfangen und in Richtung des Lichtsensors (117) zu leiten.

3. Sensorvorrichtung (100) nach Anspruch 1 oder 2, wobei die Sensorvorrichtung (100) über die Oberfläche (101) bewegbar ist, wobei der Prozessor (119) ausgebildet ist, eine zeitliche Änderung des Abstands des ersten Oberflächenbereichs (113) zu der Sensorvorrichtung (100) und eine zeitliche Änderung des Abstands des zweiten Oberflächenbereichs (115) zu der Sensorvorrichtung (100) zu erfassen, wobei der Prozessor (119) ferner ausgebildet ist, auf der Basis der Abstandsänderungen des ersten und des zweiten Oberflächenbereichs (113, 115) zu der Sensorvorrichtung (100) eine Bewegungsgeschwindigkeit der Sensorvorrichtung (100) über die Oberfläche (101) zu ermitteln.

4. Sensorvorrichtung (100) nach Anspruch 3, wobei der Prozessor (119) ausgebildet ist, auf der Basis der Abstandsänderung des ersten Oberflächenbereichs (113) und/oder des zweiten Oberflächenbereichs (115) zu der Sensorvorrichtung (100), und der ermittelten Bewegungsgeschwindigkeit der Sensorvorrichtung (100) ein Oberflächenprofil der Oberfläche (101) zu ermitteln.

5. Sensorvorrichtung (100) nach einem der vorstehenden Ansprüche, wobei die Optikeinrichtung (107) eine zweite Spiegeleinrichtung (123) umfasst, welche hinter der ersten teiltransparenten Spiegeleinrichtung (121) angeordnet ist, wobei die zweite Spiegeleinrichtung (123) ausgebildet ist, den zweiten Teillichtstrahl (111) nach Durchleuchten der ersten teiltransparenten Spiegeleinrichtung (121) in Richtung des zweiten Oberflächenbereichs (115) zu reflektieren, und die Reflexion (111-1) des zweiten Teillichtstrahls (111) an dem zweiten Oberflächenbereich (115) in Richtung des Lichtsensors (117) zu reflektieren.

6. Sensorvorrichtung (100) nach Anspruch 5 , wobei die erste teiltransparente Spiegeleinrichtung (121) und die zweite Spiegeleinrichtung (123) ausgebildet sind, den ersten Teillichtstrahl (109) und den zweiten Teillichtstrahl (111) parallel oder annähernd parallel zueinander in Richtung des ersten bzw. zweiten Oberflächenbereichs (113, 115) zu reflektieren.

7. Sensorvorrichtung (100) nach Anspruch 5 oder 6, wobei die zweite Spiegeleinrichtung (123) einen Spiegel oder ein Reflexionsprisma (201) umfasst.

8. Sensorvorrichtung (100) nach einem der vorstehenden Ansprüche, wobei der Lichtsensor (117) ein Sensorarray, insbesondere ein Dioden-Array, umfasst.

9. Sensorvorrichtung (100) nach einem der vorstehenden Ansprüche, wobei der Prozessor (119) ausgebildet ist, die Reflexion (109-1) des ersten Teillichtstrahls (109) und die Reflexion (111-1) des zweiten Teillichtstrahls (111) auf der Basis der Positionen der Reflexionen auf dem Lichtsensor (117) und/oder auf der Basis einer mit dem Lichtsensor (117) erfassten Intensität der Reflexionen zu unterscheiden.

10. Sensorvorrichtung (100) nach einem der vorstehenden Ansprüche, wobei der Lichtsensor (117) eine Linseneinrichtung (125) umfasst, welche ausgebildet ist, eine fokussierte Abbildung des reflektierten ersten Teillichtstrahls (109) und des reflektierten zweiten Teillichtstrahls (111) auf dem Lichtsensor (117) zu erzeugen.

11. Sensorvorrichtung (100) nach einem der vorstehenden Ansprüche, wobei die Beleuchtungseinrichtung (103) eine Laserdiode, eine LED oder einen Laser umfasst.

12. Sensorvorrichtung (100) nach einem der vorstehenden Ansprüche, wobei die Beleuchtungseinrichtung (103) ausgebildet ist, den Lichtstrahl (105) als gebündelten Lichtstrahl, insbesondere mit einem punktförmigen oder einem strichförmigen Querschnitt, auszustrahlen.

13. Sensorvorrichtung (100) nach einem der vorstehenden Ansprüche, wobei die Beleuchtungseinrichtung (103) ausgebildet ist, den Lichtstrahl (105) in einem Weißlicht-Wellenlängenbereich, einem Infrarot-Wellenlängenbereich oder einem UV-Wellenlängenbereich auszustrahlen.

## Claims

1. Sensor device (100) for measuring a surface (101), with:
an illumination unit (103) for emitting a light beam (105);
an optical device (107) which is designed to divide the light beam (105) into a first partial light beam (109) and a second partial light beam (111), whereby the optical device (107) is designed to emit the first partial light beam (109) in the direction of a first area (113) of the surface (101) and to emit the second partial light beam (111) in the direction of a second area (115) of the surface (101);
a light sensor (117) which is designed to receive a reflection (109-1) of the first partial light beam (109) on the first surface area (113) and a reflection (111-1) of the second partial light beam (111) on the second surface area (115); and
a processor (119) which is designed to detect a distance of the first surface area (113) and of the second surface area (115) to the sensor device (100) on the basis of the respective position of the reflection (109-1) of the first partial light beam (109) and the reflection (111-1) of the second partial light beam (111) on the light sensor (117);
whereby the optical device (107) comprises a first partially transparent mirror device (121), whereby the first partially transparent mirror device (121) is designed to divide the light beam (105) into the first partial light beam (109) and the second partial light beam (111), whereby the first partially transparent mirror device (121) is also designed to reflect the first partial light beam (109) in the direction of the first surface area (113) and to reflect the reflection (109-1) of the first partial light beam (109) on the first surface area (113) in the direction of the light sensor (117);
whereby the first partially transparent mirror device (121) comprises a partially transparent mirror, and whereby the partially transparent mirror can be passed by the second partial light beam (111).

2. Sensor device (100) In accordance with Claim 1, whereby the optical device (107) is designed to receive the reflection (109-1) of the first partial light beam (109) on the first surface area (113) and the reflection (111-1) of the second partial light beam (111) on the second surface area (115) and to direct these in the direction of the light sensor (117).

3. Sensor device (100) in accordance with Claim 1 or 2, whereby the sensor device (100) is movable above the surface (101), whereby the processor (119) is designed to detect a temporal change in the distance of the first surface area (113) to the sensor device (100) and a temporal change in the distance of the second surface area (115) to the sensor device (100), whereby the processor (119) is also designed to determine a speed of movement of the sensor device (100) above the surface (101) on the basis of the changes in distance of the first and second surface areas (113, 115) to the sensor device (100).

4. Sensor device (100) in accordance with Claim 3, whereby the processor (119) is designed to determine a surface profile of the surface (101) on the basis of the change in distance of the first surface area (113) and/or of the second surface area (115) to the sensor device (100) and the determined speed of movement of the sensor device (100).

5. Sensor device (100) in accordance with any one of the preceding claims, whereby the optical device (107) comprises a second mirror device (123) which is located behind the first partially transparent mirror device (121), whereby the second mirror device (123) is designed to reflect the second partial light beam (111) in the direction of the second surface area (115) after light has passed through the first partially transparent mirror device (121), and to reflect the reflection (111-1) of the second partial light beam (111) on the second surface area (115) in the direction of the light sensor (117).

6. Sensor device (100) in accordance with Claim 5, whereby the first partially transparent mirror device (121) and the second mirror device (123) are designed to reflect the first partial light beam (109) and the second partial light beam (111) parallel or approximately parallel to each other in the direction of the first and second surface areas (113, 115) respectively.

7. Sensor device (100) in accordance with any one of Claims 5 or 6, whereby the second mirror device (123) comprises a mirror or a reflection prism (201).

8. Sensor device (100) in accordance with any one of the preceding claims, whereby the light sensor (117) comprises a sensor array, in particular a diode array.

9. Sensor device (100) in accordance with any one of the preceding claims, whereby the processor (119) is designed to distinguish the reflection (109-1) of the first partial light beam (109) and the reflection (111 -1) of the second partial light beam (111) on the basis of the positions of the reflections on the light sensor (117) and/or on the basis of the intensity of the reflections detected with the light sensor (117).

10. Sensor device (100) in accordance with any one of the preceding claims, whereby the light sensor (117) comprises a lens device (125) which is designed to create a focused image of the reflected first partial light beam (109) and of the reflected second partial light beam (111) on the light sensor (117).

11. Sensor device (100) in accordance with any one of the preceding claims, whereby the illumination unit (103) comprises a laser diode, an LED or a laser.

12. Sensor device (100) in accordance with any one of the preceding claims, whereby the illumination unit (103) is designed to emit the light beam (105) as a bundled light beam, in particular with a point-shaped or line-shaped cross-section.

13. Sensor device (100) in accordance with any one of the preceding claims, whereby the illumination unit (103) is designed to radiate the light beam (105) in a white light wavelength range, an infrared wavelength range or a UV wavelength range.

## Revendications

1. Dispositif de détection (100) permettant de mesurer une surface (101), comprenant :
un dispositif d'éclairage (103) permettant d'émettre un faisceau lumineux (105) ;
un dispositif optique (10), conçu pour partager le faisceau lumineux (105) en un premier faisceau lumineux partiel (109) et un second faisceau lumineux partiel (111), le dispositif optique (107) étant conçu pour émettre le premier faisceau lumineux partiel (109) en direction d'une première zone de surface (113) de la surface (101), et pour émettre le second faisceau lumineux (111) en direction d'une seconde zone de surface (115) de la surface (101) ;
un capteur de lumière (117), conçu pour recevoir une réflexion (109-1) du premier faisceau lumineux partiel (109) sur la première zone de surface (113) et une réflexion (111-1) du second faisceau lumineux partiel (111) sur la seconde zone de surface (115) ; et
un processeur (119), conçu pour détecter, sur la base de la position de la réflexion (109-1) du premier faisceau lumineux partiel (109) et de la réflexion (111-1) du second faisceau lumineux partiel (111) sur le capteur de lumière (117), une distance de la première zone de surface (113) et de la seconde zone de surface (115) par rapport au dispositif de détection (100) ;
le dispositif optique (107) comprenant un premier dispositif de miroir partiellement transparent (121), le premier dispositif de miroir partiellement transparent (121) étant conçu pour partager le faisceau lumineux (105) en premier faisceau lumineux partiel (109) et second faisceau lumineux partiel (111), le premier dispositif de miroir partiellement transparent (121) étant, en outre conçu pour réfléchir le premier faisceau lumineux partiel (109) en direction de la première zone de surface (113), et pour réfléchir la réflexion (109-1) du premier faisceau lumineux partiel (109) sur la première zone de surface (113) en direction du capteur de lumière (117) ;
le premier dispositif de miroir partiellement transparent (121) comprenant un miroir partiellement transparent, et le miroir partiellement transparent peut être éclairé par transparence par le second faisceau lumineux partiel (111).

2. Capteur de lumière (100) selon la revendication 1, le dispositif optique (107) étant conçu pour recevoir la réflexion (109-1) du premier faisceau lumineux partiel (109) sur la première zone de surface (113) et la réflexion (111-1) du second faisceau lumineux partiel (111) sur la seconde zone de surface (115) et la diriger en direction du capteur de lumière (117).

3. Dispositif de détection (100) selon la revendication 1 ou 2, le dispositif de détection (100) étant déplaçable sur la surface (101), le processeur (119) étant conçu pour détecter une modification temporelle de la distance de la première zone de surface (113) par rapport au dispositif de détection (100) et une modification temporelle de la distance de la seconde zone de surface (115) par rapport au dispositif de détection (100), le processeur (119) étant, en outre, conçu, pour déterminer, sur la base des modifications de distance de la première et de la seconde zone de surface (113, 115) par rapport au dispositif de détection (100), une vitesse de déplacement du dispositif de détection (100) sur la surface (101).

4. Dispositif de détection (100) selon la revendication 3, le processeur (119) étant conçu pour déterminer, sur la base de la modification de distance de la première zone de surface (113) et/ou de la seconde zone de surface (115) par rapport au dispositif de détection (100), et de la vitesse de déplacement déterminée du dispositif de détection (100), un profil de la surface (101).

5. Dispositif de détection (100) selon l'une des revendications précédentes, le dispositif optique (107) comprenant un second dispositif de miroir (123), qui est disposé derrière le premier dispositif de miroir partiellement transparent (121), le second dispositif de miroir (123) étant conçu pour réfléchir le second faisceau lumineux partiel (111) après éclairage par transparence du premier dispositif de miroir partiellement transparent (121) en direction de la seconde zone de surface (115), et réfléchir la réflexion (111-1) du second faisceau lumineux partiel (111) sur la seconde zone de surface (115) en direction du capteur de lumière (117).

6. Dispositif de détection (100) selon la revendication 5, le premier dispositif de miroir partiellement transparent (121) et le second dispositif de miroir partiellement transparent (123) étant conçus pour réfléchir le premier faisceau lumineux partiel (109) et le second faisceau lumineux partiel (111) de manière parallèle ou quasiment parallèle l'un par rapport à l'autre en direction de la première ou de la seconde zone de surface (113, 115).

7. Dispositif de détection (100) selon la revendication 5 ou 6, le second dispositif de miroir (123) comprenant un miroir ou un prisme à réflexion (201).

8. Dispositif de détection (100) selon l'une des revendications précédentes, le capteur de lumière (117) comprend un ensemble de capteurs, en particulier un ensemble de diodes.

9. Dispositif de détection (100) selon l'une des revendications précédentes, le processeur (119) étant conçu pour distinguer la réflexion (109-1) du premier faisceau lumineux partiel (109) et la réflexion (111-1) du second faisceau lumineux partiel (111) sur la base des positions des réflexions sur le capteur de lumière (117) et/ou sur la base d'une intensité de la réflexion détectée avec le capteur de lumière (117).

10. Dispositif de détection (100) selon l'une des revendications précédentes, le capteur de lumière (117) comprenant un dispositif de lentilles (125) conçu pour générer une image focalisée du premier faisceau lumineux partiel (109) réfléchi et du second faisceau lumineux partiel (111) réfléchi sur le capteur de lumière (117).

11. Dispositif de détection (100) selon l'une des revendications précédentes, le dispositif d'éclairage (103) comprenant une diode laser, une DEL ou un laser.

12. Dispositif de détection (100) selon l'une des revendications précédentes, le dispositif d'éclairage (103) étant conçu pour émettre le faisceau lumineux (105) en tant que faisceau lumineux focalisé, en particulier avec une coupe transversale en forme de point ou en forme de trait.

13. Dispositif de détection (100) selon l'une des revendications précédentes, le dispositif d'éclairage (103) étant conçu pour émettre le faisceau lumineux (105) dans une plage de longueurs d'onde de lumière blanche, une plage de longueurs d'onde d'infrarouge ou une plage de longueurs d'onde d'ultraviolet.
